# EUROPÄISCHE PATENTSCHRIFT

(11) **EP 2 030 684 B1**
(45) Veröffentlichungstag und Bekanntmachung des Hinweises auf die Patenterteilung: **10.04.2019**
(21) Anmeldenummer: 07018725.7
(22) Anmeldetag: 24.09.2007
(51) Int. Cl.: B01L 3/00

(54) **Vorrichtung zur Bereitstellung von pipettierbaren Substanzen**
Device for providing pipettable substances
Dispositif de préparation de substances pouvant être pipetées

(30) Priorität: 17.08.2007 EP 07016192
(43) Veröffentlichungstag der Anmeldung: 04.03.2009
(73) Patentinhaber: QIAGEN GmbH, 40724 Hilden (DE)
(72) Erfinder: Voit Thomas, 40721 Hilden (DE)
(74) Vertreter: Zimmermann & Partner Patentanwälte mbB

(56) Entgegenhaltungen:
- WO-A1-2005/092734
- JP-A- H10 316 593
- US-A- 4 000 740
- US-A- 4 786 279
- US-B1- 6 475 774

## Beschreibung

Die vorliegende Erfindung betrifft eine Vorrichtung zur Bereitstellung von pipettierbaren Substanzen. Die Vorrichtung ist zum Beispiel für Anwendungszwecke in der Biochemie, Molekulargenetik, Mikrobiologie, medizinischen Diagnostik oder forensischen Medizin geeignet.

Auf vielen technischen Gebieten wie beispielsweise der Chemie, der Biologie, der Biochemie, der Biotechnologie, der Medizin oder der Umwelttechnologie ist es notwendig, biologische Zielmoleküle enthaltende Materialien (z.B. fließfähige biologische Proben) zu analysieren, zu separieren, zu verarbeiten oder miteinander in Reaktion zu bringen. Zu diesem Zweck werden die Flüssigkeiten oder Materialien mit verschiedenen Verfahren gefiltert, abgekühlt, erhitzt, in Bestandteile zerlegt, gewaschen, pipettiert und/oder mittels anderer Verfahren behandelt. Häufig ist es notwendig, eine lange und komplexe Folge von Verarbeitungsschritten zu durchlaufen, um das biologische Material zu präparieren. Dabei werden während der Verarbeitung verschiedene Reagenzien zugesetzt. Je nach Art der Analyse bzw. Aufbereitung der Probe kommen dabei verschiedene Kombinationen von Reagenzien während des Verfahrens zum Einsatz. Insbesondere bei größeren Probenmengen erfolgt die Prozessierung vorzugsweise automatisiert. Üblicherweise werden dabei die zur Prozessierung benötigten Reagenzien in vorgefüllten Behältnissen von einer Bedienperson in eine Vorrichtung zur automatischen Probenverarbeitung eingesetzt. Zur Entnahme der Reagenzien ist die Vorrichtung mit Einrichtungen zum Öffnen der Behältnisse - wenn diese bei der Beladung des Gerätes nicht schon geöffnet wurden - und zur gesteuerten Entnahme versehen. Dabei kann das Öffnen und Entnehmen durch dasselbe Werkzeug vorgesehen sein, indem zum Beispiel eine Kanüle durch einen perforierbaren Deckel des Behältnisses stößt und anschließend über eine externe Saugvorrichtung das Reagenz abgesaugt wird.

Es sind eine Vielzahl von Varianten für die Entnahme von pipettierbaren Substanzen aus vorgefüllten Behältnissen bekannt. Beispielsweise beschreibt JP H10-316593 A eine chemischen Reaktionsverarbeitungsvorrichtung, die magnetische Teilchen zur Durchführung von Verfahren, wie z. B. Synthesen von Substanzen, verwendet. Darin weist eine Pipettiereinrichtung mehrere Düsen zum Ansaugen und Abgeben von Flüssigkeit aufweist, und eine Verarbeitungsstufe ist mit einer Gruppe von in einer Matrix angeordneten Gefäßen versehen.

Dennoch lässt der Stand der Technik großen Spielraum für Verbesserungen. Es ist daher Aufgabe der vorliegenden Erfindung, eine solche Vorrichtung im Hinblick auf eine Steigerung der Prozesseffizienz und der Wirtschaftlichkeit auszugestalten.

Ein erster Aspekt der Erfindung betrifft einen Behälter (im folgenden auch als Kammer bzw. Einsatz bezeichnet) zur Aufnahme einer pipettierbaren Substanz gemäß Anspruch 1.

Die Öffnungsflächen sind so ausgelegt, dass sie von einem Öffnungswerkzeug zumindest teilweise durchstoßen bzw. durchtrennt werden können. Der Zugriff erfolgt bevorzugt durch eine Pipettenspitze.

Der Behälter enthält bevorzugt eines oder mehrere für die pipettierbare Substanz durchlässige Zwischenwandelemente in dem Substanzvolumen, wobei diese bevorzugt im Wesentlichen senkrecht zu der Öffnungsfläche angeordnet sind.

Zur Verbesserung der Identifizierungsmöglichkeit kann der Behälter mit einer Markierungs-Fläche mit einer Identifikationsmarkierung für die Substanz versehen sein. Die Identifikationsmarkierung ist bevorzugt ein Barcode, stärker bevorzugt ein zweidimensionaler Barcode oder ein RFID. Die Markierungs-Fläche weist dabei einen schrägen Winkel zur Öffnungsfläche auf, vorzugsweise einen Winkel zwischen 3° und 20°.

Bevorzugt ist der Behälter mit einer pipettierbaren Substanz zum Prozessieren, Aufreinigen und/oder Analysieren von biologische Zielmoleküle enthaltenden Substanzen und/oder zum Prozessieren und/oder Analysieren der biologischen Zielmoleküle gefüllt.

Der Deckel oder die Wand des Behälters ist mit mindestens einer Verstärkung versehen, die einer beim Durchstoßen bzw. Durchtrennen der Öffnungsflächen angewendeten Kraft entgegenwirkt. Die Verstärkung ist vorzugsweise Teil des Deckels.

Die Verstärkung ist aus einem anderen Material als die Öffnungsflächen gefertigt und weist vorzugsweise eine höhere Materialstärke als der Bereich der Öffnungsflächen auf.

Bevorzugt werden die Öffnungsflächen von einem verstärkten Umrandungsteil zumindest teilweise umrandet, der vorzugsweise ringförmig ausgestaltet ist. Bevorzugt umfasst der Deckel oder die Wand zusätzlich eine Mehrzahl von Verstärkungsstegen, die mit dem Umrandungsteil in Kontakt stehen.

Die Verstärkungsstege sind bevorzugt in Sternform mit Bezug auf die Mitte der Öffnungsfläche angeordnet.

Die Verstärkung umfasst ferner bevorzugt mindestens einen quer zwischen zwei Öffnungsflächen verlaufenden Zwischensteg, wobei zumindest einige der Verstärkungsstege mit dem oder den Zwischensteg(en) oder mit dem Wand- bzw. Deckelrand in Kontakt stehen.

Bevorzugt stellt die um eine oder mehrere Öffnungsflächen angeordnete Verstärkung eine sich zur Öffnungsfläche hin verjüngende und vorzugsweise im Wesentlichen konische Führung zur Verfügung, wodurch ein Öffnungswerkzeug beim Auflegen bzw. Aufsetzen zentriert werden kann.

Bevorzugt ist zumindest ein Teil der Öffnungsflächen im Wesentlichen entlang zumindest einer Reihe angeordnet. Dabei sind die Mitten der Öffnungsflächen vorzugsweise um ein ganzzahliges Vielfaches von 5 bis 12 mm, weiter bevorzugt 8 bis 10 mm, am meisten bevorzugt von 9 mm voneinander beabstandet. Insbesondere ist ein ganzzahliges Vielfaches mit Faktor 2 oder mehr bevorzugt. Die Verwendung dieser Maße hat den Vorteil, dass ein Zugriff durch eine Mehrfach-Pipettiereinheit möglich ist, die auf einfache Weise auch auf Standard-Multiwellplatten mit einem entsprechenden Well-Abstand zugreifen kann.

Bevorzugt können die Öffnungsflächen (40), unabhängig voneinander, im Wesentlichen eine Form aufweisen, die aus der Gruppe Kreis, Ellipse, und Polygon ausgewählt ist.

Eine beispielhafte Anwendung zur Erläuterung der Erfindung betrifft ein System zur Entnahme einer pipettierbaren Substanz aus einem mit einem Deckel mit mindestens einer Öffnungsfläche verschlossenen vorgefüllten Behältnis, umfassend ein Öffnungswerkzeug mit einem Rohr, das einen im wesentlichen der Form der Öffnungsfläche entsprechenden Querschnitt und an einem distalen Ende einen relativ zur Rohrlängsachse im wesentlichen schräg verlaufenden Abschluss aufweist, der beim Anwenden des Öffnungswerkzeugs einen innerhalb der Öffnungsfläche gelegenen Teil des Deckels in Richtung des Behältnisses bewegt, um so eine Öffnung in dem Deckel zu schaffen. Weiterhin umfasst das Öffnungswerkzeug einen Angriffspunkt für ein Transportwerkzeug, wobei das Öffnungswerkzeug dazu ausgelegt ist, nach seiner Anwendung an dem Behältnis zu verbleiben, ein Transportwerkzeug zum Bewegen des Öffnungswerkzeugs durch den Deckel, und eine Kanüle, die dazu angepasst ist, im angewendeten Zustand des Öffnungswerkzeugs durch das Rohr zumindest zu einem Teil ihrer Länge in das Innere des Behältnisses eingeführt zu werden, und deren eines Ende mit einer Ansaugvorrichtung zum Ansaugen einer pipettierbaren Substanz aus dem Inneren des Behältnisses verbindbar ist.

Vorzugsweise weist die Öffnungsfläche dabei im Wesentlichen eine Form auf, die aus der Gruppe Kreis, Ellipse, und Polygon ausgewählt ist. Sie ist zudem vorzugsweise durch eines oder mehrere der Merkmale charakterisiert, das oder die aus der folgenden Gruppe ausgewählt ist/sind:
- die Öffnungsfläche weist eine im wesentlichen geringere Materialstärke als der Deckel auf,
- die Öffnungsfläche weist ein anderes Material als der Deckel auf,
- die Öffnungsfläche ist durch einen Begrenzungsbereich begrenzt, der im Wesentlichen eine geringere Materialstärke als der Deckel aufweist, wobei der Begrenzungsbereich vorzugsweise Bereiche unterschiedlicher Materialstärke aufweist,
- die Öffnungsfläche ist durch einen Begrenzungsbereich mit größerer Materialstärke als der Deckel begrenzt.

Vorzugsweise weist das Öffnungswerkzeug mindestens ein Positionselement zur passgenauen Positionierung an dem Behältnis auf, das aus der Gruppe Stift, Loch, Langloch, Nut und Steg ausgewählt ist.

Vorzugsweise weist der schräge Abschluss des Rohrs des Öffnungswerkzeugs an seinem distalen Ende eine Spitze auf, und über den Bereich von seinem dorsalen Ende zum distalen Ende mindestens zwei unterschiedliche Winkel α relativ zur Rohrlängsachse. Vorzugsweise ist der Winkel α der Abschrägung des Abschlusses des Rohrs relativ zur Rohrlängsachse im Bereich des distalen Endes des Abschlusses im Wesentlichen kleiner ist als in anderen Bereichen des Abschlusses.

Vorzugsweise gewährleistet ein Ende des Rohrs einen reibschlüssigen Sitz des Rohrs im Deckel des Behältnisses im aufgesetzten Zustand des Öffnungswerkzeugs, vorzugsweise durch Ausgestaltung in Form eines Konus. Besonders bevorzugt ist der Sitz des Rohrs fluiddicht, gasdicht und / oder dicht gegenüber der pipettierbaren Substanz.

Vorzugsweise sind mehrere Rohre in einer m x n Matrix angeordnet und durch ein gemeinsames Element verbunden. Vorzugsweise ist dabei eine durch eine Normale der Hauptebene des schrägen Abschlusses des Rohrs definierte Raumrichtung bei mindestens zweien der Rohre unterschiedlich.

Ein weiterer Aspekt der Erfindung betrifft ein Behältnis zum Bereitstellen von pipettierbaren Substanzen, das eine Mehrzahl von gleichartigen oder unterschiedlich geformten Kammern mit jeweils mindestens einer Öffnung sowie mindestens einen Deckel zum Verschluss der Öffnungen, und in dem mindestens einen Deckel eingeformte konusartige Führungen umfasst.

Vorzugsweise umfasst das Behältnis ein Positionselement, das aus der Gruppe ausgewählt ist, die aus einem Stift, einem Loch, einem Langloch, einer Nut und einem Steg besteht.

Vorzugsweise ist der mindestens eine Deckel des Behältnisses jeweils mit mindestens einer Öffnungsfläche versehen.

Vorzugsweise weist die Öffnungsfläche des Deckels des Behältnisses im Wesentlichen eine Form auf, die aus der Gruppe Kreis, Ellipse, und Polygon ausgewählt ist. Die Öffnungsfläche ist zudem vorzugsweise durch eines oder mehrere der Merkmale charakterisiert, das oder die aus der folgenden Gruppe ausgewählt ist/sind:
- die Öffnungsfläche weist eine im wesentlichen geringere Materialstärke als der Deckel auf,
- die Öffnungsfläche weist ein anderes Material als der Deckel auf,
- die Öffnungsfläche ist durch einen Begrenzungsbereich begrenzt, der im Wesentlichen eine geringere Materialstärke als der Deckel aufweist, wobei der Begrenzungsbereich vorzugsweise Bereiche unterschiedlicher Materialstärke aufweist,
- die Öffnungsfläche ist durch einen Begrenzungsbereich mit größerer Materialstärke als der Deckel begrenzt.

Vorzugsweise ist das Behältnis mit im wesentlichen sämtlichen benötigten Substanzen für ein vorbestimmtes Verfahren insbesondere zum Prozessieren, Aufreinigen und/oder Analysieren von biologische Zielmoleküle enthaltenden Materialien gefüllt.

Eine weitere beispielhafte Anwendung zur Erläuterung der Erfindung betrifft ein Öffnungswerkzeug für ein vorgefüllten Behältnis, das mit einem Deckel verschlossen ist, der mindestens eine Öffnungsfläche aufweist, wobei das Öffnungswerkzeug ein Rohr umfasst, das einen im wesentlichen der Form der Öffnungsfläche entsprechenden Querschnitt und an einem distalen Ende einen relativ zur Rohrlängsachse im wesentlichen schräg verlaufenden Abschluss aufweist, der beim Anwenden des Öffnungswerkzeugs einen innerhalb der Öffnungsfläche gelegenen Teil des Deckels in Richtung des Behältnisses bewegt, um so eine Öffnung in dem Deckel zu schaffen, wobei der schräge Abschluss an seinem distalen Ende eine Spitze aufweist und über den Bereich von seinem
dorsalen Ende zum distalen Ende mindestens zwei unterschiedliche Winkel α relativ zur Rohrlängsachse aufweist.

Vorzugsweise ist der Winkel α der Abschrägung des Abschlusses des Rohrs relativ zur Rohrlängsachse im Bereich des distalen Endes des Abschlusses im Wesentlichen kleiner ist als in anderen Bereichen des Abschlusses.

Vorzugsweise weist ein Rohr des Öffnungswerkzeugs ein Halteelement zur Fixierung des Öffnungswerkzeugs an dem Behältnis auf, vorzugsweise in Form einer das Rohr zumindest teilweise umlaufenden Schulter oder Rille.

Vorzugsweise gewährleistet ein Ende des Rohrs einen reibschlüssigen Sitz des Rohrs in dem Deckel im aufgesetzten Zustand des Öffnungswerkzeugs, wobei das Rohr vorzugsweise zumindest auf einem Teil seiner Länge in Form eines Konus ausgestaltet ist.

Vorzugsweise sind mehrere Rohre des Öffnungswerkzeugs in einer m x n Matrix angeordnet und durch ein gemeinsames Element verbunden. Vorzugsweise ist dabei eine durch eine Normale der Hauptebene des schrägen Abschlusses des Rohrs definierte Raumrichtung bei mindestens zweien der Rohre unterschiedlich.

Ein weiteres Beispiel zur Erläuterung der Erfindung betrifft ein Verfahren zur Entnahme einer pipettierbaren Substanz aus einem vorgefüllten Behältnis, mit den Schritten:
a) Bereitstellen eines erfindungsgemäßen Systems und eines erfindungsgemäßen Behältnisses,
b) Automatisiertes oder manuelles Auflegen eines erfindungsgemäßen Öffnungswerkzeugs auf einen Deckel des Behältnisses,
c) Bewegen des Öffnungswerkzeugs durch den Deckel des Behältnisses, so dass ein Rohr des Öffnungswerkzeugs eine Öffnungsfläche in dem Deckel des Behältnisses mindestens teilweise öffnet und das Rohr zu mindestens einem Teil seiner Länge in das Innere des Behältnisses eindringt und dort fixiert wird,
d) Positionieren eines Pipettierwerkzeugs an eine Position über einer Durchlassöffnung in dem Öffnungswerkzeug und Absenken des Pipettierwerkzeugs in die Durchlassöffnung und in das darunter befindliche Rohr, bis mindestens ein Teil des Pipettierwerkzeugs aus dem distalen Ende des Rohrs heraus in die zu entnehmende Substanz ragt,
e) Ansaugen einer in dem Behältnis befindlichen pipettierbaren Substanz durch das Pipettierwerkzeug mittels einer damit verbundenen Ansaugvorrichtung.

Vorzugsweise umfasst das Verfahren einen weiteren Schritt f) in Form des vollständigen Herausziehens der Kanüle aus dem Öffnungswerkzeug.

Vorzugsweise werden die Schritte d) bis f) mehrfach wiederholt, unter Verwendung derselben oder unterschiedlicher Kanülen.

Vorzugsweise wird das Bewegen in Schritt c) durch das Eingreifen von Positionselementen zwischen dem Behältnis und dem Öffnungswerkzeug begleitet, die aus der Gruppe Stift - Loch, Stift - Langloch, und Nut - Steg ausgewählt sind.

Vorzugsweise werden die Schritte d) bis f) mit gleichzeitig mehreren Pipettierwerkzeugen durchlaufen.

Vorzugsweise weist das bei dem Verfahren eingesetzte Behältnis mehrere baulich getrennte Kammern auf, denen jeweils mindestens eine Öffnungsfläche in einem Deckel zugeordnet ist. Vorzugsweise öffnet in Schritt c) eine Mehrzahl von Rohren beim Bewegen des Öffnungswerkzeugs eine Mehrzahl von Öffnungsflächen jeweils mindestens teilweise.

Vorzugsweise umfasst das Verfahren einen weiteren Schritt g), in dem das Behältnis mit aufgesetztem Öffnungswerkzeug mittels einer Abdeckung, die auf dem Öffnungswerkzeug angeordnet wird, verschlossen wird.

Vorzugsweise wird in Schritt b) das Öffnungswerkzeug durch bevorzugt konisch geformte Führungen an dem Deckel zentriert.

Im Hinblick auf die obigen Ausführungen wird ein Behälter nach Anspruch 1 bereitgestellt.

Im Folgenden werden die Einzelheiten der Erfindung anhand verschiedener Ausführungsbeispiele unter Bezugnahme auf die beigefügten Zeichnungen erläutert. Darin zeigt:
- Fig. 1a-1b: schematische Darstellungen eines Systems gemäß einer Ausführungsform
- Fig. 2a: perspektivische Ansicht eines Behältnisses ohne Öffnungswerkzeug gemäß einer Ausführungsform
- Fig. 2b: perspektivische Ansicht eines Behältnisses mit Öffnungswerkzeug gemäß einer Ausführungsform
- Fig. 3a-3b: perspektivische Ansicht und seitliche Querschnittsansicht eines Deckels gemäß einer Ausführungsform
- Fig. 4a-4b: perspektivische Ansicht und Querschnittsansicht eines Öffnungswerkzeugs gemäß einer Ausführungsform
- Fig. 5a-5b: Querschnittsansichten eines Behältnisses mit Deckel und Öffnungswerkzeug gemäß einer Ausführungsform, vor und nach dem Öffnungsvorgang
- Fig. 6: Schematische Draufsicht auf eine Öffnungsfläche eines Deckels gemäß einer Ausführungsform
- Fig. 7a-7d: Perspektivische Ansichten und Querschnittsansicht von Rohren eines Öffnungswerkzeugs gemäß Ausführungsformen

Bei der folgenden Beschreibung verschiedener Ausführungsbeispiele der vorliegenden Erfindung sind funktional gleiche Merkmale der verschiedenen Ausführungsbeispiele mit denselben Bezugszeichen versehen.

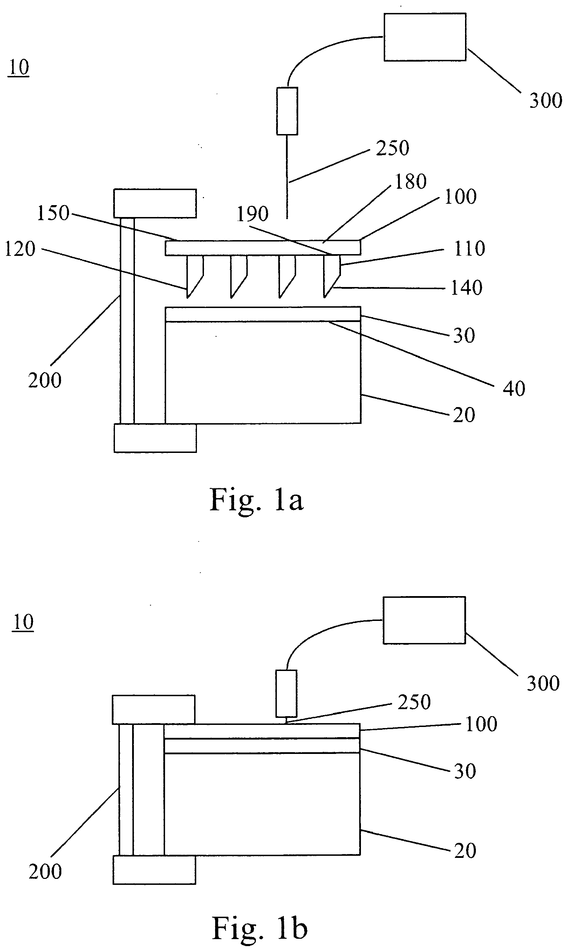

Fig. 1a zeigt schematisch eine bevorzugte Ausführungsform eines Systems gemäß der vorliegenden Erfindung. Ein mit pipettierbaren Substanzen (Reagenzien) vorgefülltes Behältnis (20) ist mit einem Deckel (30) verschlossen. Dieser weist eine Mehrzahl von Öffnungsflächen (40) auf. Ein Öffnungswerkzeug (100) umfasst mindestens ein Rohr (110), das einen im wesentlichen der Form der Öffnungsfläche entsprechenden Querschnitt und an seinem distalen Ende (120) einen relativ zur Rohrlängsachse im wesentlichen schräg verlaufenden Abschluss (140) (im folgenden auch Schneidkante genannt) aufweist. Zur Vorbereitung der Anwendung des Öffnungswerkzeugs wird dieses auf den Deckel des Behältnisses aufgelegt, so dass der Abschluss des Rohrs (110) auf der Öffnungsfläche aufliegt. Zur Öffnung werden das Öffnungswerkzeug und das Behältnis (20) gegeneinander gedrückt, typischerweise durch ein Transportwerkzeug (200), das an mindestens einem Angriffspunkt (150) an dem Öffnungswerkzeug oder/und an dem Behältnis angreift. Typische Ausgestaltungen eines solchen Transportwerkzeugs sind dem Fachmann bekannt.

Insbesondere können das Öffnungswerkzeug (100) und/oder das Behältnis (20) mit jeweils mindestens einem Positionselement zur passgenauen Positionierung an dem Transportwerkzeug (200) ausgestattet werden. Vorzugsweise werden dabei Elemente aus einer Gruppe gewählt, die aus Stift, Loch, Langloch, Nut und Steg besteht. Ein oder mehrere Positionselemente des Transportwerkzeugs (200) greifen während des Zusammendrückens mit einem dazu passenden Positionselement als Gegenpart ein, das an dem Behältnis und/oder dem Deckel (30) angebracht ist. Entsprechende mögliche Paarungen bilden Stift-Loch, Stift-Langloch, Nut-Steg oder Stift-Nut, wobei auch Kombinationen anderer Elemente als im Umfang der Erfindung betrachtet werden.

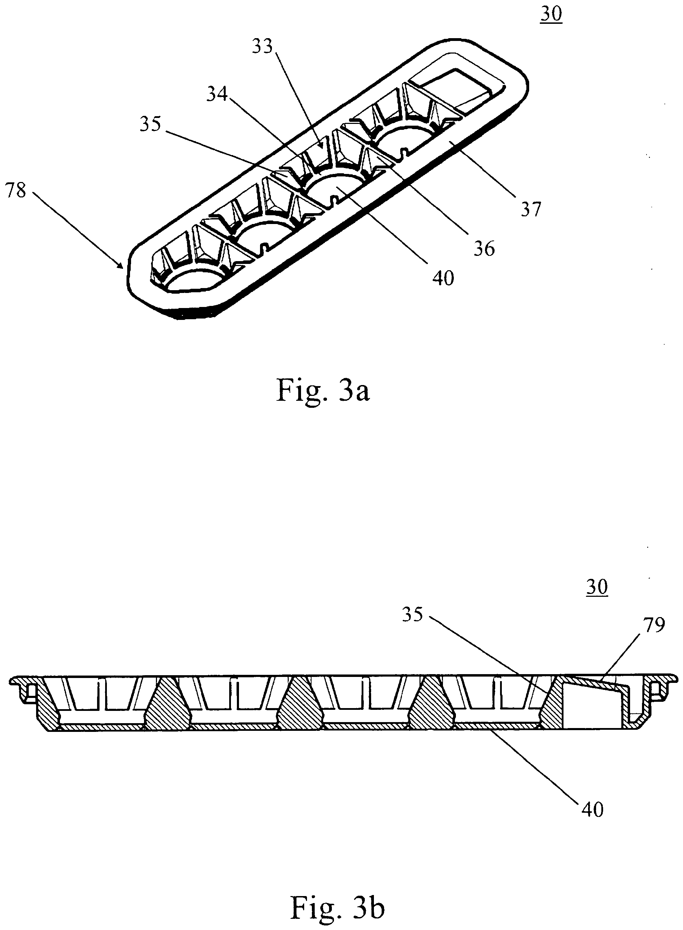

Beim Öffnen wird ein innerhalb der Öffnungsfläche (40) gelegener Teil des Deckels (30) durch den Druck des Rohrabschlusses in Richtung des Behältnisses (20) bewegt und auf diese Weise eine Öffnung in dem Deckel (30) geschaffen. Die Figuren 3a und 3b zeigen eine bevorzugte Ausführungsform des Deckels. Gleichzeitig dringt das Rohr durch die Öffnung in das Behälterinnere ein. Das Öffnungswerkzeug (100) verbleibt nach dem beschriebenen Öffnungsvorgang an dem Behältnis (20).

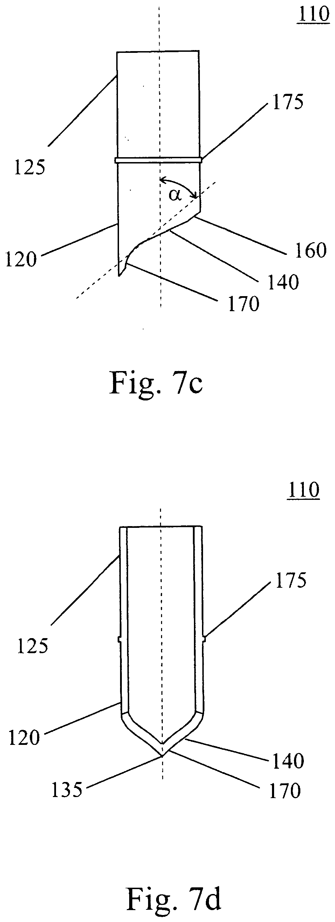

Dabei kann ein stabiler Sitz des Werkzeugs im Behältnis über eine Anzahl verschiedener Varianten sichergestellt werden. In einer bevorzugten Ausführungsform steckt das Öffnungswerkzeug durch mechanischen Reibschluss im Deckel (30) des Behältnisses (20). Besonders bevorzugt steckt das Öffnungswerkzeug so in dem Behältnis (20), dass die Verbindungsstelle zwischen Öffnungswerkzeug und Behältnis fluiddicht, gasdicht und / oder dicht gegenüber der pipettierbaren Substanz ist. Eine andere Variante umfasst ein Halteelement, etwa eine an der Außenseite des Rohrs umlaufende Schulter (175) oder Rille, die mit dem Deckel (30) des Behältnisses (20) eingreift. Die Schulter und andere Details sind in den Fig. 1a und 1b aus Übersichtlichkeitsgründen nicht eingezeichnet, eine beispielhafte Darstellung der Schulter (175) findet sich in Fig. 7c und 7d. Die Schulter oder Rille kann dabei durchgehend oder nur stellenweise an der Außenseite des Rohrs umlaufen.

Zur Entnahme der vorgefüllten Substanz wird danach ein Pipettierwerkzeug (250) zu mindestens einem Teil seiner Länge durch eine Durchlassöffnung (190) in dem Rohr (110) des Öffnungswerkzeugs in das Innere des Behältnisses (20) eingeführt, bis mindestens ein Teil des Pipettierwerkzeugs aus dem distalen (unteren) Ende (120) des Rohrs heraus in die zu entnehmende Substanz ragt. Das Pipettierwerkzeug ist mit einer Ansaugvorrichtung (300) verbunden, die zum Ansaugen einer pipettierbaren Substanz aus dem Inneren des Behältnisses (20) ausgelegt ist. Das Pipettierwerkzeug kann sowohl mittels Aktoren, die typischerweise von einer automatischen Steuerung angesteuert werden, als auch manuell eingeführt werden, dies gilt ebenso für ein späteres Herausbewegen des Pipettierwerkzeugs aus dem Behältnis bzw. dem Rohr. Fig 1b zeigt schematisch das System mit angewendetem Öffnungswerkzeug (100) und einem Pipettierwerkzeug (250), die in das Behältnis eingeführt wurde.

Durch das Pipettierwerkzeug, dessen Ende in die zu pipettierende Substanz in dem vorgefüllten Behältnis (20) ragt, wird dann mittels der Ansaugvorrichtung (300) die Substanz aus dem Behältnis entnommen. Dabei können entweder Teile des oder der gesamte Inhalt des Behältnisses in einem Arbeitsgang entnommen werden. Beispielsweise kann über das Pipettierwerkzeug ein Teil des Inhalts entnommen werden, das Pipettierwerkzeug vollständig aus dem Behältnis entfernt (etwa herausgefahren) und z.B. an eine Parkposition bewegt werden. Zu einem späteren Zeitpunkt kann mit demselben oder einem weiteren Pipettierwerkzeug ein weiterer Teil des Inhalts des Behältnisses entnommen werden.

Ein Vorteil einer beispielhaften Anwendung der vorliegenden Erfindung kann darin bestehen, dass der Vorgang der Öffnung des Deckels und die Entnahme der pipettierbaren Substanz getrennt voneinander ablaufen. Dadurch wird verhindert, dass das spitze Ende des Pipettierwerkzeugs, das bei Systemen aus dem Stand der Technik zum Durchstoßen des Deckels verwendet wird, verstopft oder beschädigt wird. Gleichzeitig sinken die Anforderungen an die mechanische Stabilität des Pipettierwerkzeugs, weil es nicht die zum Öffnen des Deckels nötigen Kräfte übertragen muss. Zudem ist durch die Trennung von Öffnungswerkzeug und Pipettierwerkzeug auch eine Detektion des Pegels der in dem Behältnis verbleibenden pipettierbaren Substanz durch die Öffnung möglich, weil die Öffnung auch nach nach Herausziehen des Pipettierwerkzeugs erhalten bleibt. Ausführungsformen der Erfindung betreffen weiterhin Ausgestaltungen des Öffnungswerkzeugs und des Deckels, die ein leichteres und zuverlässiges Öffnen ermöglichen.

Wenn das Pipettierwerkzeug nach einem oder mehreren Entnahmevorgängen vollständig aus dem Behältnis entfernt wurde und zu diesem Zeitpunkt keine weiteren Substanzen entnommen werden sollen, kann das Behältnis (20) mit aufgesetztem Öffnungswerkzeug (100) optional mittels einer Abdeckung wieder verschlossen werden, um eine eventuelle Kontamination oder eine Verdunstung der vorgefüllten Substanzen zu verhindern. Die Abdeckung wird dabei auf dem Öffnungswerkzeug angeordnet. Die Art der Abdeckung ist dabei nicht besonders eingeschränkt und es gibt vielfältige aus dem Stand der Technik bekannte Möglichkeiten zur Realisierung, z.B. Folien, Deckel aus nachgiebigen oder steifen Materialen wie Kunststoff, Metall o.ä. Die Abdeckung kann sowohl zur einmaligen als auch zur mehrmaligen Verwendung vorgesehen sein.

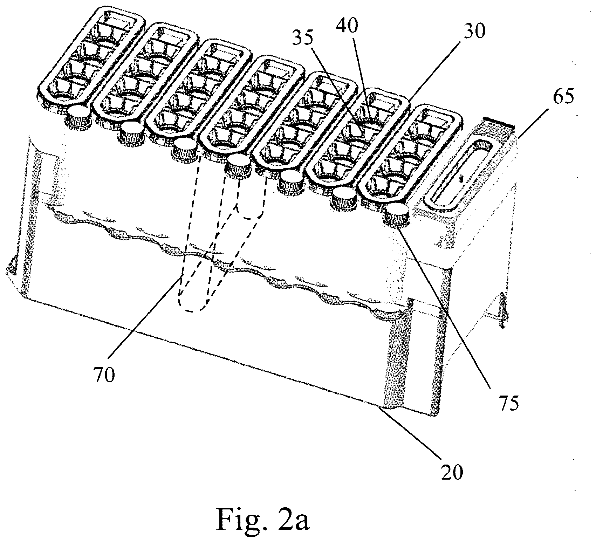

Fig. 2a zeigt ein Behältnis (20) nach einem Ausführungsbeispiel der Erfindung. Das Behältnis kann mehrere, voneinander baulich getrennte, gleich oder unterschiedlich geformte Kammern oder Einsätze (70) aufweisen, die jeweils eine Mehrzahl von Öffnungen aufweisen. In der Figur ist exemplarisch und schematisch eine Kammer (70) gestrichelt dargestellt. In einem typischen Anwendungsfall der Erfindung umfasst das Behältnis (20) mehrere (hier sieben) Kammern bzw. Einsätze (70), die mit im wesentlichen sämtlichen benötigten Substanzen für ein vorbestimmtes Verarbeitungsverfahren, insbesondere zum Prozessieren, Separieren und/oder Analysieren eines ein biologisches Zielmolekül enthaltenden Materials, gefüllt sind. Dazu zählen beispielsweise jeweils eine oder mehrere Lyselösungen, Waschlösungen, Elutionslösungen, Puffer, Bindelösungen, Trennmaterialien in pipettierbarer Form wie Suspensionen von magnetischen Beads, Enzyme, Sonden, Marker, Ausgangsmaterialien für Downstreamapplikationen wie PCR, Arrays und/oder Assays u.ä.

Die Kammern bzw. Einsätze (70) sind in der beschriebenen Ausführungsform vorzugsweise mit den unten näher beschriebenen Deckeln (30) versehen. Neben den Kammern, bei denen die Entnahme ihres Inhaltes mittels des erfindungsgemäßen Verfahrens bzw. Systems erfolgt, kann das Behältnis weitere Kammern und/oder Einsätze (65, 75) umfassen, die vorzugsweise ebenfalls Materialien zur Durchführung der geplanten Prozesse enthalten, bei denen die Entnahme ihres Inhaltes aber nicht mittels des erfindungsgemäßen Verfahrens bzw. Systems erfolgt. So kann ein Teil der oben beispielhaft genannten Materialien sich in den Kammern bzw. Einsätzen (70) befinden, während weitere benötigte Substanzen vorteilhafterweise in die verbleibenden Kammern und/oder Einsätze des Behältnisses eingebracht werden. Es ist besonders vorteilhaft, dass sich in den Kammern (70) die ein oder mehreren Lyselösungen, Waschlösungen, Elutionslösungen, Bindelösungen, und/oder Puffer befinden.

Die Verwendung von Einsätzen, die in das Behältnis eingebracht und diesem wieder entnommen werden können, hat den Vorteil, dass Materialien die einer besonderen Behandlung bedürfen, wie beispielsweise Enzyme, die gekühlt werden müssen, oder Suspension, die direkt vor der Anwendung noch einmal homogenisiert werden müssen, unabhängig von den anderen Materialien und dem Gesamtbehältnis ihre Spezialbehandlung erfahren können.

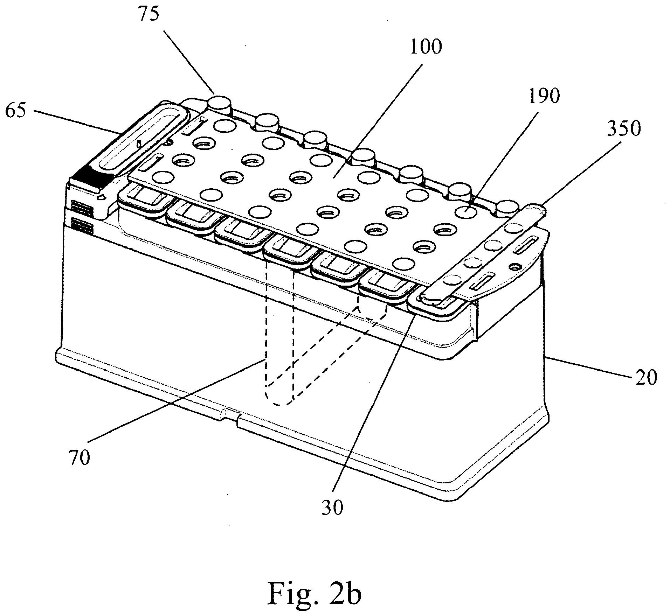

Die Kammern in der in Fig. 2b abgebildeten Ausführungsform sind jeweils mit einem Deckel (30) versehen, auf den das Öffnungswerkzeug (100) angewandt wurde. In der Figur ist exemplarisch und schematisch eine Kammer (70) gestrichelt dargestellt. Die durch das Öffnungswerkzeug erzeugten Durchlassöffnungen (190) ermöglichen das Eintreten des Pipettierwerkzeugs in die Kammer bzw. den Einsatz (70). In der Fig. 2b ist zudem eine Abdeckung (350), die beispielhaft nur auf einem der Deckel aufgebracht ist, gezeigt. Die Abdeckung kann vorteilhafterweise mehrfach verwendet werden und wird vorzugsweise aus einem elastischen Kunststoffmaterial hergestellt.

Fig. 3a zeigt eine perspektivische Ansicht eines Deckels (30) für das Behältnis (70) nach einer Ausführungsform. Fig. 3b zeigt einen Querschnitt durch diesen Deckel (30). Die bevorzugt konisch geformten Führungen (35) über den Öffnungsflächen (40) haben vorteilhafterweise eine Führungsfunktion für die Rohre (110) des Öffnungswerkzeugs (100), so dass dieses beim Aufsetzen auf den Deckel zentriert wird. Jeweils eine oder mehrere Öffnungsflächen (40) in dem Deckel (30) sind einer oder mehreren darunterliegenden Kammern (70) des Behältnisses (20) zugeordnet. In dem dargestellten Ausführungsbeispiel sind vier Öffnungsflächen für eine Kammer vorgesehen. Je nach Konstruktion können so über mehrere Pipettierwerkzeuge gleichzeitig durch mehrere Öffnungen in dem Deckel die gleiche Substanz aus einer Kammer und/oder unterschiedliche oder gleiche Substanzen aus mehreren Kammern entnommen werden. Bei mehreren Pipettierwerkzeugen können entsprechende Anpassungen der Ansaugvorrichtung (300) erforderlich sein, oder es können mehrere Ansaugvorrichtungen zum Einsatz kommen.

Gemäß der Erfindung ist der Deckel (30) mit mindestens einer Verstärkung (33) versehen, die einer beim zumindest teilweisen Durchstoßen bzw. Durchtrennen der Öffnungsflächen (40) angewendeten Kraft entgegenwirkt. Die Verstärkung weist dabei vorzugsweise eine höhere Materialstärke als der Bereich der Öffnungsflächen (40) auf. Sie ist aus einem anderen Material als die Öffnungsflächen gefertigt. Die Öffnungsflächen (40) werden von einem verstärkten Umrandungsteil (34) zumindest teilweise umrandet, der ringförmig ausgestaltet ist. Dabei umfasst der Deckel zusätzlich eine Mehrzahl von Verstärkungsstegen (35), die mit dem Umrandungsteil (34) in Kontakt stehen. Die Verstärkungsstege (35) sind in Sternform mit Bezug auf die Mitte der Öffnungsfläche (40) angeordnet. Die Verstärkung (33) umfasst mindestens einen quer zwischen zwei Öffnungsflächen verlaufenden Zwischensteg (36), wobei zumindest einige der Verstärkungsstege (35) mit dem oder den Zwischensteg(en) (36) oder mit dem Deckelrand (37) in Kontakt stehen.

Die um eine oder mehrere Öffnungsflächen angeordnete Verstärkung (33) stellt eine sich zur Öffnungsfläche (40) hin verjüngende und vorzugsweise im Wesentlichen konische Führung zur Verfügung, wodurch das Öffnungswerkzeug (100) beim Auflegen bzw. Aufsetzen zentriert wird.

Zumindest ein Teil der Öffnungsflächen (40) ist im Wesentlichen entlang zumindest einer Reihe angeordnet. Dabei sind die Mitten der Öffnungsflächen (40) vorzugsweise um ein ganzzahliges Vielfaches von 5 bis 12 mm, weiter bevorzugt von 8 bis 10 mm, am meisten bevorzugt von 9 mm voneinander beabstandet.

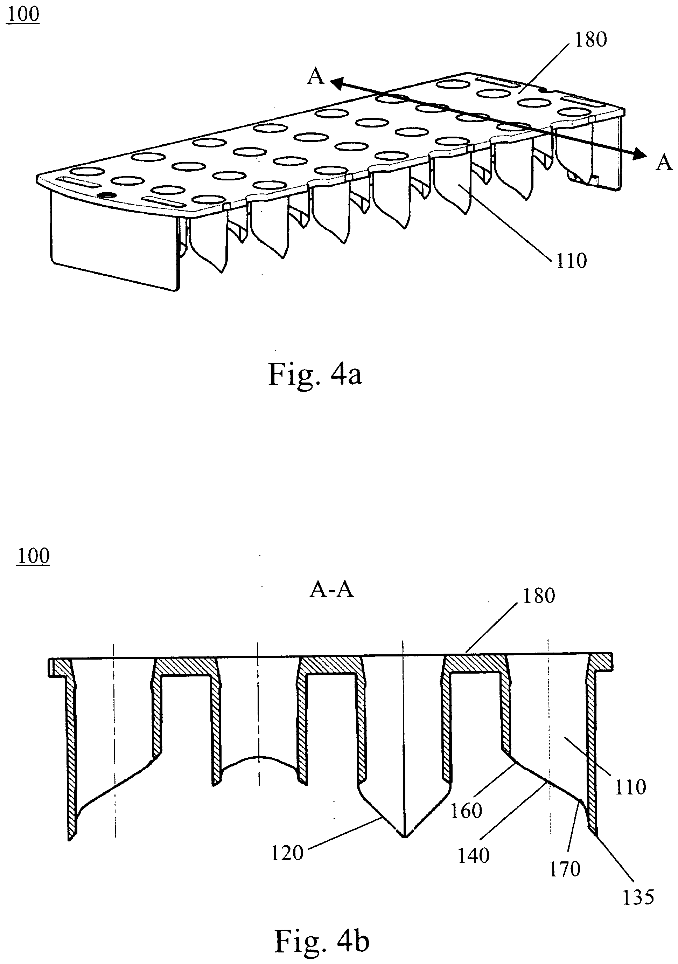

Fig. 4a zeigt ein bevorzugtes Ausführungsbeispiel des Öffnungswerkzeugs (100), das mehrere Rohre (110) aufweist, die in einer m x n Matrix angeordnet und durch ein Element (180) verbunden sind. Die Rohre (110) des Öffnungswerkzeugs weisen dabei bevorzugt verschiedene Winkelstellungen in Bezug auf ihre Längsachsen auf. Anders ausgedrückt, unterscheidet sich die durch die Normale einer Hauptebene des schrägen Abschlusses (140) des Rohrs (110) definierte Raumrichtung zwischen den einzelnen Rohren. Die Hauptebene ist dabei als diejenige Ebene zu verstehen, die nach Verständnis eines Fachmanns am ehesten geeignet ist, den Verlauf des Abschlusses zu repräsentieren.

Bevorzugt unterscheiden sich die Winkelstellungen der Normalen zwischen den einzelnen Rohren um Vielfache von 90 Grad, so dass vier verschiedene Winkelstellungen möglich sind. Dies bewirkt eine Führung und Zentrierung des Öffnungswerkzeugs beim Auflegen oder -setzen auf den Deckel (30) durch bevorzugt konisch geformte Führungen (35).

Fig. 4b zeigt einen Querschnitt durch das Öffnungswerkzeug aus Figur 4a entlang der Strecke A-A, bei dem die unterschiedlichen Schnittprofile der Rohre erkennbar sind, die durch die unterschiedlichen Winkelstellungen bedingt sind.

In einem Ausführungsbeispiel der Erfindung kann das Rohr (110) des Öffnungswerkzeugs (100) andere als eine kreisrunde Querschnittsform aufweisen, dazu gehören etwa (nicht limitierend) die Querschnittsformen Ellipse oder Polygon oder beliebige Variationen aus den vorgenannten. Zudem kann das Rohr (110) eine Struktur aufweisen, die nur im Wesentlichen rohrförmig ist, aber Abweichungen von der Rohrform aufweist. Dazu gehören etwa fehlende Segmente oder beliebig geformte Durchbrüche in der Wandstruktur.

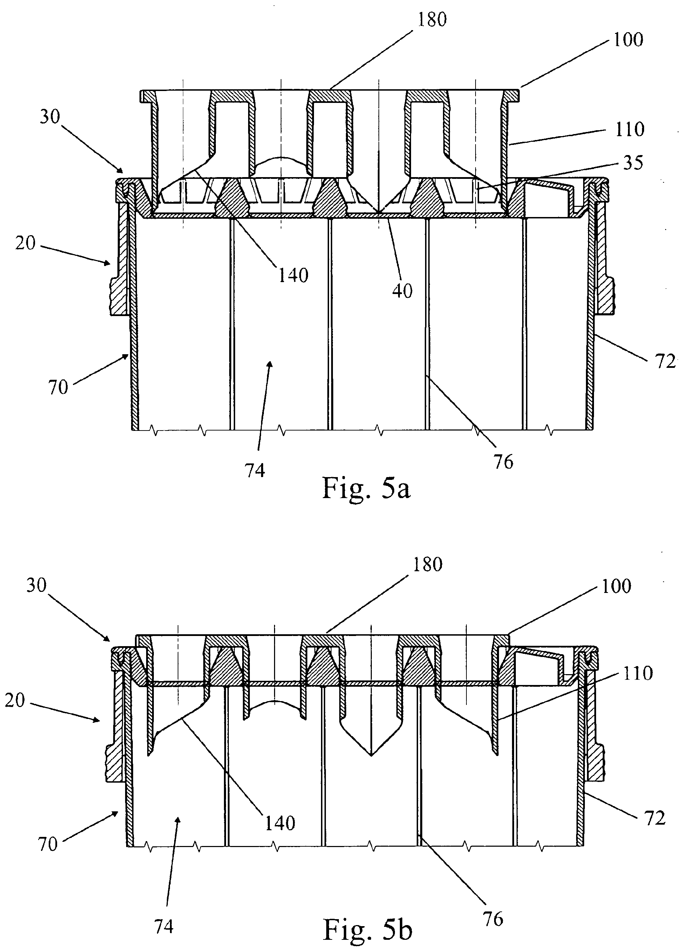

In der Figur 5a ist ein Behältnis (20) mit zugehörigem Deckel (30) und aufgesetztem Öffnungswerkzeug (100) gemäß einer bevorzugten Ausführungsform gezeigt. Die Spitzen der Rohre (110) liegen auf den Öffnungsflächen (40) des Deckels (30) auf. Dabei können technische Maßnahmen getroffen werden, die verhindern, dass das aufliegende Öffnungswerkzeug unbeabsichtigt die Öffnungsflächen des Deckels beschädigt bzw. durch diese hindurchtritt. Durch die konusartigen Führungen (35) sind die Rohre (110) und damit das Öffnungswerkzeug (100) im Verhältnis zum Deckel zentriert. Figur 5b zeigt den Zustand nach Eindrücken des Öffnungswerkzeugs (100) durch den Deckel (30). Die durch die Schneidkanten (140) ausgeschnittenen Öffnungsflächen (40) sind in Fig. 5b nicht dargestellt.

Wie bereits dargelegt, wird beim Bewegen bzw. Drücken des Öffnungswerkzeugs in Richtung der Öffnungsflächen ein innerhalb der Öffnungsfläche (40) gelegener Teil des Deckels (30) in Richtung des Behältnisses bewegt und auf diese Weise eine Öffnung in dem Deckel geschaffen. Der schräge Abschluss (140) des Rohrs (110) übt dabei als eine Art Schneidkante eine Kraft auf die Öffnungsfläche aus. In einem Ausführungsbeispiel der Erfindung weist die gesamte Öffnungsfläche (40) eine im Wesentlichen geringere Materialstärke als der restliche Deckel (30) auf, um das Öffnen zu erleichtern. In einem anderen Ausführungsbeispiel ist die Öffnungsfläche aus einem anderen, vorzugsweise weicheren Material als der restliche Deckel gefertigt, um das Aufschneiden zu erleichtern, was beispielsweise mit einem dem Fachmann bekannten 2K (2 Komponenten) Spritzgießprozess realisierbar ist. Dabei kann die Öffnungsfläche auch als Folie ausgeführt sein.

Insbesondere bezieht sich ein bevorzugtes Ausführungsbeispiel der Erfindung auf eine Kammer bzw. einen Einsatz (70), im Folgenden als Behälter bezeichnet, wie in den Figuren 2a, 2b sowie in den Figuren 5a und 5b gezeigt. Der Behälter dient zur Aufnahme einer pipettierbaren Substanz für die Prozessierung biologischer Substanzen und umfasst eine Außenwand (72), ein von der Außenwand (72) begrenztes, zusammenhängendes Substanzvolumen (74) zum Aufnehmen der pipettierbaren Substanz, und eine Wand, die vorzugsweise in Form eines Deckels (30) ausgeführt ist oder dessen bereits oben beschriebene Merkmale aufweist, mit einer Mehrzahl von Öffnungsflächen (40). Diese sind für einen Zugriff zu dem Substanzvolumen (74) ausgelegt, etwa durch eine Pipettenspitze. Zu diesem Zweck sind die Öffnungsflächen so ausgelegt, dass sie von einem Öffnungswerkzeug (100) durchstoßen bzw. durchtrennt werden können. Die Öffnungsflächen (40) können, unabhängig voneinander, im Wesentlichen eine Form aufweisen, die aus der Gruppe Kreis, Ellipse, und Polygon ausgewählt ist. Eine bevorzugte Ausführungsform eines Deckels ist in Fig. 3a gezeigt.

Der Behälter enthält eines oder mehrere für die pipettierbare Substanz durchlässige Zwischenwandelemente (76) in dem Substanzvolumen (74), wobei diese bevorzugt im Wesentlichen senkrecht zu der Öffnungsfläche 40 angeordnet sind.

Zur Verbesserung der Identifizierungsmöglichkeit kann der Behälter (70) mit einer Markierungs-Fläche (79) mit einer Identifikationsmarkierung für die Substanz versehen sein. Die Identifikationsmarkierung ist bevorzugt ein Barcode, stärker bevorzugt ein zweidimensionaler Barcode oder ein RFID. Die Markierungs-Fläche (79) weist dabei einen schrägen Winkel zur Öffnungsfläche auf, vorzugsweise einen Winkel zwischen 3° und 20°.

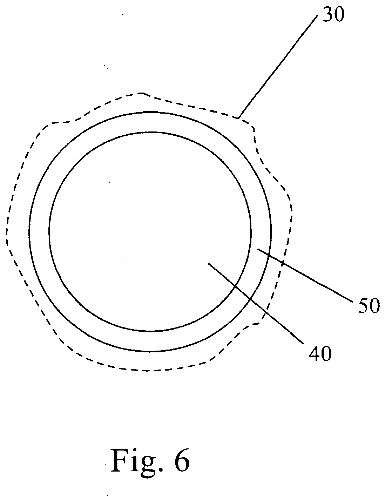

Fig. 6 zeigt einen Auschnitt eines Deckels (30) des Behältnisses (20) nach einem bevorzugten Ausführungsbeispiel der Erfindung. Dabei ist die Öffnungsfläche (40) durch einen Begrenzungsbereich (50) begrenzt. Der Begrenzungsbereich fungiert als eine Art Sollbruchstelle oder Solltrennstelle, entlang der die Auftrennung der Verbindung zwischen der Öffnungsfläche und dem Deckel durch die Schneidkante vorgenommen wird. Zu diesem Zweck ist der Begrenzungsbereich so ausgeführt, dass eine leichte Auftrennung durch die Schneidkante gewährleistet ist. Dies kann auf mehrere Arten gewährleistet werden.

In einer bevorzugten Variante ist der Begrenzungsbereich so ausgeführt, dass er eine andere, vorzugsweise geringere Materialstärke als der restliche Deckel (30) aufweist. In einem weiteren Ausführungsbeispiel weist der Begrenzungsbereich (50) selbst wiederum Bereiche unterschiedlicher Materialstärke auf. Als nicht-limitierendes Beispiel kann bei einem kreisförmigen Begrenzungsbereich (50) eine Hälfte des Kreises eine Materialstärke aufweisen, die einem Viertel von der des umgebenden Deckels entspricht, während die andere Hälfte eine Materialstärke von 70 Prozent von derjenigen des umgebenden Deckels entspricht.

In einem weiteren Ausführungsbeispiel ist der Begrenzungsbereich in einem anderen Material als der restliche Deckel ausgeführt, was beispielsweise mit einem dem Fachmann bekannten 2K Spritzgießprozess realisierbar ist. Dabei kann der Begrenzungsbereich beispielsweise auch als Folie ausgeführt sein.

Durch die Begrenzung der Öffnungsfläche durch einen Bereich dünnerer Materialstärke wird das Öffnen mit den erfindungsgemäßen Mitteln erleichtert. In dem vorgenannten Ausführungsbeispiel mit variabler Stärke des Begrenzungsbereichs (50) kommt ein weiterer Effekt hinzu. Der Bereich geringerer Stärke ermöglicht ein leichtes initiales Eindringen bzw. Einschneiden durch den Abschluss (140) des Rohrs (110). Mit zunehmendem Eindringen des Rohrs in Richtung des Behältnisses wird der Begrenzungsbereich (50) durch den schrägen Abschluss (140) immer weiter aufgetrennt. Es ist dabei wünschenswert, dass die Öffnungsfläche nicht vollständig vom Rest des Deckels abgetrennt wird, da der abgetrennte Teil sonst in das Behältnis fallen könnte. Dies könnte zu Problemen beim Pipettieren führen, wenn sich der abgetrennte Teil des Deckels vor die Öffnung des Pipettierwerkzeugs legt. Der etwas stärker ausgelegte Bereich des Begrenzungsbereichs trägt dazu bei zu verhindern, dass der Begrenzungsbereich vollständig aufgetrennt wird. In der Folge bleibt der abgetrennte Teil der Öffnungsfläche an dieser Stelle mit dem restlichen Deckel verbunden und fällt nicht in das Behältnis (20).

Das bereits beschriebene Ziel des Öffnens des Deckels mit geringem Kraftaufwand und die Verhinderung des vollständigen Abtrennens der Öffnungsfläche wird auch durch die folgenden Ausführungsbeispiele der Erfindung erreicht. Der benötigte Kraftaufwand ist besonders groß, wenn mehrere Öffnungsflächen gleichzeitig geöffnet werden sollen und wenn der Deckel fest mit dem Behälter verbunden, z.B. verschweißt, ist. Zudem werden erhebliche Kräfte benötigt bei Verwendung üblicher Verschlussmaterialien wie Polyethylen zur Herstellung des Deckels.

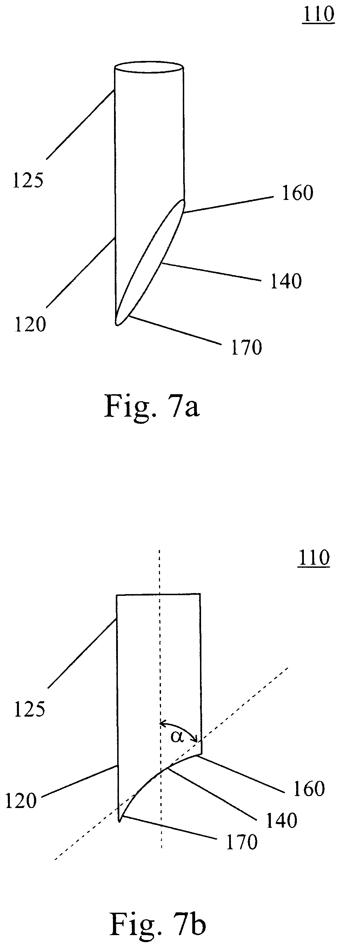

Fig. 7a zeigt ein Rohr (110) des Öffnungswerkzeugs nach einem Ausführungsbeispiel der Erfindung. Das Rohr (110) weist ein dorsales Ende (125) und ein distales Ende (120) auf. Der schräge Abschluss (140) (Schneidkante) weist ebenfalls ein dorsales Ende (160) und ein distales Ende (170) auf. In diesem Beispiel ist der Winkel der Abschrägung (140) konstant.

Fig. 7b zeigt ein Ausführungsbeispiel der Erfindung als Seitenansicht, bei dem die Abschrägung des Abschlusses (140) des Rohres (110) in dem Bereich vom dorsalen Ende (160) zum distalen Ende (170) des Abschlusses mindestens zwei verschiedene Winkel α relativ zur Rohrlängsachse aufweist. Vorzugsweise ist der Abschluss so ausgestaltet, dass der kleinere Winkel im Bereich des distalen Endes (170) und der größere Winkel im Bereich des dorsalen Endes (160) liegt. Dies ermöglicht ein Einschneiden bzw. Eindringen mit verringertem Kraftaufwand gegenüber einem Abschluss mit konstantem Schrägungswinkel. Durch den größeren Winkel am dorsalen Ende (160) ist die Schneidwirkung des schrägen Rohrabschlusses (140) in diesem Bereich verringert, wodurch bei geeigneter Dimensionierung ein Teil des Begrenzungsbereichs (50) nicht durchtrennt wird. Der Rohrabschluss (140) wirkt an dieser Stelle also nicht als Schneidkante, sondern als Drückkante, wobei der bereits abgetrennte Teil der Öffnungsfläche in Richtung des Inneren des Behältnisses gedrückt wird.

Figur 7c zeigt ein bevorzugtes Ausführungsbeispiel der Erfindung als Seitenansicht, bei dem die Gestaltung des Winkelverlaufs für den oben angeführten Zweck besonders vorteilhaft ausgestaltet ist. Aus fertigungstechnischen oder anderen Gründen kann es zweckmäßig sein, dass der Winkel der Abschrägung auf einem kurzen Abschnitt in unmittelbarer Nähe des distalen Endes (170) etwas größer gewählt wird als dem oben beschriebenen Verlauf entsprechen würde. Dies wird als im Umfang der Erfindung liegend betrachtet und ist in Fig. 7c dargestellt (Vergrößerung des Schrägungswinkels unterhalb von Bezugszeichen 170).

Figur 7d zeigt ein weiteres bevorzugtes Ausführungsbeispiel der Erfindung als Querschnittsansicht durch das Rohr (110). Dabei ist am distalen Ende (170) eine Spitze (135) ausgeformt, um ein Einschneiden bzw. den Beginn des Durchtrennens der Öffnungsfläche bzw. des Begrenzungsbereichs zu erleichtern. Die Spitze (135) ermöglicht ein Einschneiden bzw. Eindringen des Begrenzungsbereichs mit verringertem Kraftaufwand gegenüber einem Abschluss ohne entsprechende Spitze. Vorteilhafterweise wird die Spitze (135) mit einem der vorigen Ausführungsbeispiele (aus Fig. 7b, Fig. 7c) kombiniert, wie dies auch in Fig. 7d gezeigt ist. Es ist jedoch erfindungsgemäß auch möglich, die Ausführungsform mit Spitze mit einem Abschluss mit z.B. konstantem Schrägungswinkel α zu kombinieren.

Es sind auch erfindungsgemäße Ausgestaltungen möglich, bei denen ein komplettes Trennen der Öffnungsfläche vom restlichen Deckel durchgeführt wird. Dabei kann der Deckel entweder in das Behältnis fallen oder durch weitere Maßnahmen aus dem Behältnis entfernt werden.

In einem bevorzugten Ausführungsbeispiel bewirkt ein dorsales Ende (125) des Rohrs (110) einen reibschlüssigen Sitz des Rohrendes im Deckel (30) des Behältnisses (20) im aufgesetzten Zustand des Öffnungswerkzeugs (100). Besonders bevorzugt ist der Sitz des Rohrs fluiddicht, gasdicht und / oder dicht gegenüber der pipettierbaren Substanz. Zu diesem Zweck weist das obere Rohrende zum Beispiel eine leicht konusartige Form auf, die vorzugsweise einen Winkel von etwa 0,5 bis 5 Grad, weiter bevorzugt von etwa 0,7 bis 4 Grad und weiter bevorzugt von etwa 1 bis 3 Grad aufweist. Dieser Konus dient mehreren Zwecken. Er glättet eventuelle durch die Schneidkante erzeugte Ungleichmäßigkeiten in der Schnittkontur, die beim Einschneiden der Öffnungsfläche entstanden sind, indem er die Schnittkontur etwas aufweitet. Dadurch dichtet gleichzeitig das Rohr (110) bzw. das Öffnungswerkzeug (100) mit dem Deckel (30) des Behältnisses (20), was bei leicht flüchtigen Reagenzien wie Alkohol deren Verdampfen zumindest zu einem gewissen Teil verhindert bzw. vermindert. Schließlich bewirkt der Reibschluss einen stabilen mechanischen Sitz des Rohrs in dem Deckel bzw. Behältnis, wodurch auf die bereits kurz beschriebenen Positionselemente oder ähnliche Elemente zum Eingreifen o.ä. verzichtet werden kann.

Soll über den beschriebenen reibschlüssigen Sitz hinaus eine noch höhere Stabilität erreicht werden, kann das Öffnungswerkzeug (100) mit mindestens einem Positionselement zur passgenauen Positionierung an dem Behältnis (20) ausgestattet werden. Vorzugsweise werden dabei Elemente aus einer Gruppe gewählt, die aus Stift, Loch, Langloch, Nut und Steg besteht. Das Positionselement greift während des Zusammendrückens mit einem dazu passenden Positionselement als Gegenpart ein, das an dem Behältnis oder dem Deckel (30) angebracht ist. Entsprechende mögliche Paarungen bilden Stift-Loch, Stift-Langloch, Nut-Steg oder Stift-Nut, wobei auch Kombinationen anderer Elemente als im Umfang der Erfindung betrachtet werden.

Die Erfindung ist auch auf eine Vorrichtung zum Ausführen der offenbarten Verfahren gerichtet und umfasst Vorrichtungsteile zum Ausführen von jedem der beschriebenen Verfahrensschritte. Diese Verfahrensschritte können vermittels Hardwarekomponenten, einem durch geeignete Software programmierten Computer oder jede Kombination der zwei, oder in einer beliebigen anderen Weise ausgeführt werden. Des Weiteren ist die Erfindung auch auf Verfahren gerichtet, durch die die beschriebene Vorrichtung betrieben wird. Es enthält Verfahrensschritte zum Ausführen von jeder Funktion der Vorrichtung.

## Patentansprüche

1. Behälter zur Aufnahme einer pipettierbaren Substanz für die Prozessierung biologischer Substanzen, umfassend:
- eine Außenwand (72);
- ein von der Außenwand (72) begrenztes zusammenhängendes Substanzvolumen (74) zum Aufnehmen der pipettierbaren Substanz; und
- eine Wand, vorzugsweise einen Deckel (30), mit einer Mehrzahl von Öffnungsflächen (40), die für einen Zugriff zu dem Substanzvolumen (74) zur Entnahme der pipettierbaren Substanz durchstoßbar sind,
wobei die Wand bzw. der Deckel mit
einer Verstärkung (33) versehen ist, die gestaltet ist, um einer Kraft beim Durchstoßen einer oder mehrerer der Öffnungsflächen (40) entgegenzuwirken, **dadurch gekennzeichnet, dass** die Verstärkung (33) aufweist:
- ein anderes Material als die Öffnungsfläche (40); und
- ein verstärktes Umrandungs-Teil (34), das eine jeweilige Öffnungsfläche (40) zumindest teilweise umrandet; und
- eine Mehrzahl von Verstärkungsstegen (35), die mit dem Umrandungs-Teil (34) in Kontakt stehen.

2. Behälter nach einem der vorangehenden Ansprüche, wobei die Verstärkung (33) ein anderes Material und / oder eine höhere Materialstärke als die Öffnungsfläche (40) aufweist.

3. Behälter nach einem der vorangehenden Ansprüche, wobei die Verstärkungsstege (35) im Wesentlichen sternförmig um eine Mitte der Öffnungsfläche angeordnet sind.

4. Behälter nach einem der vorangehenden Ansprüche, wobei die Verstärkung (33) weiter mindestens einen quer zwischen zwei Öffnungsflächen verlaufende Zwischensteg (36) aufweist, und zumindest einige der Verstärkungsstege (35) mit dem oder den Zwischensteg(en) (36) oder mit dem Wandrand, vorzugsweise dem Deckelrand (37), in Kontakt stehen.

5. Behälter nach einem der vorangehenden Ansprüche, wobei die um eine Öffnungsfläche angeordnete Verstärkung (33) eine sich zur Öffnungsfläche hin verjüngende und vorzugsweise im Wesentlichen konische Führung zur Verfügung stellt.

6. Behälter nach einem der vorangehenden Ansprüche, wobei die Öffnungsfläche (40) durch einen Begrenzungsbereich (50) begrenzt ist, der zumindest teilweise eine geringere Materialstärke als die Öffnungsfläche (40) aufweist.

7. Behältnis nach einem der vorhergehenden Ansprüche, wobei die Öffnungsflächen (40) unabhängig voneinander im Wesentlichen eine Form aufweisen, die aus der Gruppe Kreis, Ellipse, und Polygon ausgewählt ist.

8. Behälter nach einem der vorangehenden Ansprüche, wobei zumindest ein Teil der Öffnungsflächen (40) im Wesentlichen entlang zumindest einer Reihe angeordnet sind und vorzugsweise die Mitten der Öffnungsflächen (40) voneinander um ein ganzzahliges Vielfaches von 9 mm beabstandet sind.

9. Behälter nach einem der vorangehenden Ansprüche, weiter umfassend eine Markierungs-Fläche (79) mit einer Identifikationsmarkierung für die Substanz.

10. Behälter nach einem der vorangehenden Ansprüche, wobei die Identifikationsmarkierung ein Barcode, vorzugsweise ein zweidimensionaler Barcode, oder ein RFID ist.

11. Behälter nach einem der vorangehenden Ansprüche, wobei die Markierungs-Fläche (79) in einem schrägen Winkel zur Öffnungsfläche angeordnet ist, vorzugsweise in einem Winkel zwischen 3° und 20°.

12. Behälter nach einem der vorangehenden Ansprüche, weiter umfassend ein oder mehrere für die pipettierbare Substanz durchlässige Zwischenwandelemente (76) in dem Substanzvolumen (74), wobei die ein oder mehreren Zwischenwandelemente (76) vorzugsweise im Wesentlichen senkrecht zu der Öffnungsfläche (40) angeordnet sind und/oder sich bis zu dem Deckel (20) hin erstrecken.

13. Behälter nach einem der vorangehenden Ansprüche, der mit einer pipettierbaren Substanz zum Prozessieren, Aufreinigen und/oder Analysieren von biologische Zielmoleküle enthaltenden Substanzen und/oder zum Prozessieren und/oder Analysieren der biologischen Zielmoleküle gefüllt ist.

## Claims

1. Container for holding a substance that is transferrable by pipette for the processing of biological substances, comprising:
- an outer wall (72);
- a contiguous substance volume (74) delimited by the outer wall (72) for accommodating the substance that is transferrable by pipette; and
- a wall, preferably a lid (30), having a plurality of opening areas (40) which can be perforated to allow access to the substance volume (74) for withdrawing the substance for transfer by pipette,
wherein the wall or lid is provided with a reinforcement (33) which is designed to counteract a force upon penetration of one or more of the opening areas (40),
**characterized in that** the reinforcement has:
- a different material than the opening area (40); and
- a reinforced bordering part (34) which at least partly surrounds a respective opening area (40); and
- a plurality of reinforcement fins (35) that are in contact with the bordering part (34).

2. Container according to any one of the preceding claims, wherein the reinforcement (33) has a different material and/or a greater material thickness than the opening area (40).

3. Container according to any one of the preceding claims, wherein the reinforcement fins (35) are arranged substantially in a star formation around a middle of the opening area.

4. Container according to any one of the preceding claims, wherein the reinforcement (33) further has at least one intermediate fin (36) extending transversely between two opening areas, and at least some of the reinforcement fin (35) are in contact with the one or more intermediate fin(s) (36), or the edge of the wall, preferably the edge of the lid (37).

5. Container according to any one of the preceding claims, wherein a reinforcement (33) arranged around an opening area provides a guide which becomes narrower towards the opening area and is preferably substantially conical.

6. Container according to any one of the preceding claims, wherein the opening area (40) is delimited by a boundary area (50), at least part of which has less material thickness than the opening area (40).

7. Container according to any one of the preceding claims, wherein the opening areas (40) are substantially of a shape selected from the group of circle, ellipse and polygon independently of each other.

8. Container according to any one of the preceding claims, wherein at least some of the opening areas (40) are arranged substantially in at least one row and the middles of the opening areas (40) are preferably located at a distance equal to an integer multiple of 9 mm from each other.

9. Container according to any one of the preceding claims, further comprising a marking surface (79) having an identification marking for the substance.

10. Container according to any one of the preceding claims, wherein the identification marking is a barcode, preferably a two-dimensional barcode, or a RFID.

11. Container according to any one of the preceding claims, wherein the marking surface (79) is arranged at an angle to the opening area, preferably at an angle between 3° and 20°.

12. Container according to any one of the preceding claims, further comprising one or more partition elements (76) in the substance volume (74) which are permeable for the substance that is transferrable by pipette, wherein the one or more partition elements (76) are preferably arranged substantially perpendicularly relative to the opening area (40) and/or extend as far as the lid (20).

13. Container according to any one of the preceding claims, which is filled with a substance that can be transferred by pipette for processing, purifying and/or analysing substances that contain biological target molecules and/or for processing and/or analysing the biological target molecules.

## Revendications

1. Récipient, destiné à recevoir une substance susceptible d'être pipetée, pour le traitement de substances biologiques, comprenant :
- une paroi extérieure (72) ;
- un volume à substance (74) cohérent, délimité par la paroi extérieure (72), destiné à recevoir la substance susceptible d'être pipetée ; et
- une paroi, de préférence un couvercle (30), pourvu d'une pluralité de surfaces à orifices (40), qui pour donner accès au volume pour substance (74) sont perçables, pour prélever la substance susceptible d'être pipetée,
la paroi ou le couvercle étant doté(e) d'un renfort (33) qui est conçu pour s'opposer à une force, lors d'un perçage d'une ou de plusieurs des surfaces à orifices (40),
**caractérisé en ce que** le renfort (33) comporte :
- une matière autre que la surface à orifices (40) ; et
- une partie de bordure (34) renforcée, qui borde au moins en partie une surface à orifices (40) concernée ; et
- une pluralité de listels de renfort (35) qui sont en contact avec la partie de bordure (34).

2. Récipient selon l'une quelconque des revendications précédentes, le renfort (33) comportant une matière autre et/ou une épaisseur de matière plus importante que la surface à orifices (40).

3. Récipient selon l'une quelconque des revendications précédentes, les listels de renfort (35) étant placés sensiblement en forme d'étoile autour d'un centre de la surface à orifices.

4. Récipient selon l'une quelconque des revendications précédentes, le renfort (33) comportant par ailleurs au moins un listel intermédiaire (36) s'écoulant à la transversale entre deux surfaces à orifices et au moins certains des listels de renfort (35) étant en contact avec le ou les listel(s) intermédiaire(s) (36) ou avec le bord de la paroi, de préférence avec le bord du couvercle (37).

5. Récipient selon l'une quelconque des revendications précédentes, le renfort (33) placé autour d'une surface à orifices mettant à disposition un guidage se rétrécissant en direction de la surface à orifices et de préférence de forme sensiblement conique.

6. Récipient selon l'une quelconque des revendications précédentes, la surface à orifices (40) étant délimitée par une zone de délimitation (50) qui présente au moins en partie une épaisseur de matière moins importante que la surface à orifices (40).

7. Contenant selon l'une quelconque des revendications précédentes, les surfaces à orifices (40) présentant, indépendamment les unes des autres sensiblement une forme qui est choisie dans le groupe : cercle, ellipse et polygone.

8. Récipient selon l'une quelconque des revendications précédentes, au moins une partie des surfaces à orifices (40) étant placées sensiblement le long d'au moins une rangée et de préférence, les centres des surfaces à orifices (40) étant écartés les uns des autres de la valeur d'un multiple entier de 9 mm.

9. Récipient selon l'une quelconque des revendications précédentes, comprenant en outre une surface de marquage (79) pourvue d'un marquage d'identification de la substance.

10. Récipient selon l'une quelconque des revendications précédentes, le marquage d'identification étant un code barre, de préférence un code barre bidimensionnel ou une RFID.

11. Récipient selon l'une quelconque des revendications précédentes, la surface de marquage (79) étant placée sous un angle oblique par rapport à la surface à orifices, de préférence d'un angle compris entre 3° et 20°.

12. Récipient selon l'une quelconque des revendications précédentes, comprenant en outre dans le volume à substance (74) un ou plusieurs élément(s) de paroi intermédiaire(s) (76) perméable(s) à la substance susceptible d'être pipetée, l'un ou les plusieurs élément(s) de paroi intermédiaire(s) (76) étant placé(s) de préférence sensiblement à la perpendiculaire de la surface à orifices (40) et/ou s'étendant jusqu'au couvercle (20).

13. Récipient selon l'une quelconque des revendications précédentes, lequel est rempli d'une substance susceptible d'être pipetée, pour le traitement, la purification et/ou l'analyse de substances contenant des molécules biologiques cibles et/ou pour le traitement et/ou pour l'analyse des molécules biologiques cibles.
